# EUROPEAN PATENT APPLICATION

(11) **EP 1 441 159 A1**
(43) Date of publication of application: **28.07.2004**
(21) Application number: 03075209.1
(22) Date of filing: 22.01.2003
(51) Int. Cl.: F16K 1/30

(54) **Universal filling port**

(71) Applicant: Luxembourg Patent Company S.A., 7440 Lintgen (LU)
(72) Inventor: Kremer, Paul, 7263 Walferdange (LU); Risse, Claude, 57310 Bertrange (FR)
(74) Representative: Waxweiler, Jean

(57) **Abstract**

A valve assembly (1) for gas cylinders (2) comprises a consumer outlet (9) and a universal filling port (7) for receiving a filling connector (12). The universal filling port (7) comprises a first port (71) for connecting the universal filling port (7) to the cylinder (2), and further comprises a second port (72) for connecting the universal filling port (7) to a consumer outlet (9).

## Description

This invention relates to valve arrangements with a filling port for the filling and emptying of gas cylinders with internal pressures of about 250 to 300 bars, particularly to the filling and emptying of gas cylinders equipped with integrated pressure reducers.

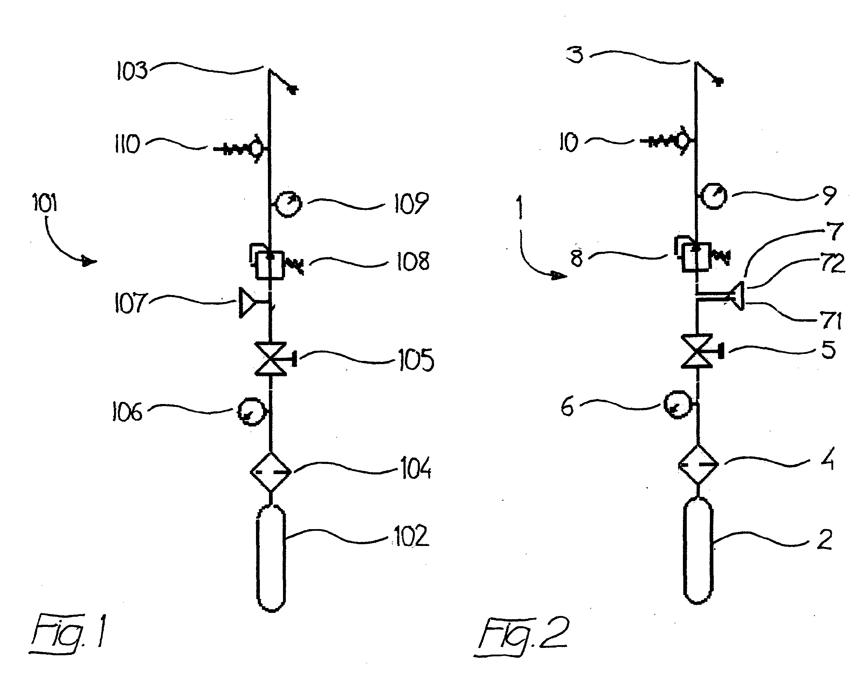

In a traditional valve assembly 101 with integrated pressure reducer 108, shown schematically in Fig. 1, the cylinder 102 is connected to the upstream part of the main valve 105 and high pressure gauge 106 via a filter 104. On the downstream side of the main valve 105, a filling port 107 is foreseen upstream of the integrated pressure reducer 108. A consumer connection 103 is provided on the downstream side of the pressure reducer 108 together with a low pressure gauge 109 and an optional vent relief valve 110.

When filling a cylinder equipped with a traditional valve assembly with integrated pressure reducer and a conventional filling port, it is necessary to open the main valve in order to refill the cylinder.

When the gas flow enters the internal path of the valve assembly from the filling port flowing towards the filter and cylinder, it also reaches the internal parts of the pressure reducer. Further, the internal working parts of the reducer are subjected to the products filled into the cylinder, such as acetone in the case of filling acetylene cylinders, which can easily lead to a pollution of the internal path of the pressure reducer with chemically aggressive or toxic substances.

Furthermore, it essential to ensure that no gas exits through the integrated pressure reducer when refilling the cylinder in order to avoid a leak of gas. The pressure reducer is subjected to filling pressures at its high-pressure side, and it is thus necessary to either set an adjustable type pressure reducer to zero flow or to seal the outlet in the case of a pre-set type pressure reducer.

Moreover, when a traditional cylinder is foreseen with a filter at the high-pressure side of the main valve, this filter often hinders the cleaning of the cylinder by vacuum. This is particularly cumbersome in the case of high-purity gases, which require a filter for drawing highly pure gas from the cylinder, but where during cleaning before refilling the same filter may easily double the time required for cleaning the cylinder by vacuum.

The object of the invention is to provide a valve assembly with a simple and efficient means to avoid gas flow through the pressure reducer or valve assembly when refilling the cylinder via the filling port. Another object of the invention is to avoid the pollution of the internal parts of the pressure reducer or valve assembly with chemically aggressive or toxic substances during refilling through the filling port. A further object of the invention is to enable a more efficient cleaning for cylinders equipped with a filter. Yet another object of the invention is to enable the use of an integrated pressure reducer installed on one cylinder to control the gas flow originating from a different cylinder.

In the universal filling port according to the invention, the filling port in the valve assembly comprises two distinct, separate connections: one leading towards the cylinder, and the other one leading towards the pressure reducer. Thus the flow paths are effectively separated into a first cylinder path leading from the filling port to the cylinder and a second outlet path leading from the filling port towards the consumer outlet. The universal filling port is arranged such that when a filling connector (e.g. a standard filling connector according to ISO 5145) is attached to it, gas flow only occurs in the direction of the cylinder to be filled. The sealing ring provided at the tip of the filling connector blocks any flow of gas in a different direction other than into the cylinder path.

After filling the cylinder, the main valve is closed and a flow connector providing a flow passage is inserted into the filling port, exclusively linking the cylinder path with the outlet path, and thus providing for gas flow from the cylinder to the pressure reducer when drawing gas from the cylinder. This flow connector may additionally be foreseen with a filter, such that the filter is only present when drawing gas from the bottle, but both flow connector and filter are absent at the filling station when cleaning the bottle by vacuum and then refilling it using said filling connector.

In another aspect of the invention, an interconnect connector is provided for effecting gas flow between an external gas source (e.g. one or more cylinder connected in parallel in order to increase the gas flow) and the outlet path comprising the integrated pressure reducer.

The solution according to the present invention offers the following advantages among others:

The integrated pressure reducer is not subjected to the filling pressure and can remain at its pre-set value. It is neither necessary to completely close an adjustable type pressure reducer, nor to seal the exit of a pressure reducer of the pre-set type. The filling process comprises fewer steps and is thus significantly simpler.

The internal parts of the integrated pressure reducer are not subjected to aggressive or corrosive products during the filling of the cylinder, as in the case of refilling acetone into acetylene cylinders.

The filling port according to the invention may be operated with a standard filling connector, e.g. according to industry standard ISO 5145, and still offers all the advantages of the invention. No modification needs to be performed at conventional cylinder filling stations, as the universal filling port according to the invention comprises all elements for the refilling operation.

It is further possible to connect a full cylinder with or without integrated pressure reducer to the integrated pressure reducer of an empty cylinder. Hence, gas from the full cylinder can be drawn through the integrated pressure reducer of the empty cylinder, and that without risk if the interconnect connectors according to the invention are used. The interconnect connector according to the invention avoids the dangerous situation which could arise when an empty cylinder is connected to a full cylinder. The interconnect connector according to the invention seals the first cylinder path leading into the empty cylinder, thus rendering it impossible to directly fill the empty cylinder from the full one, and only allows the gas flow from the full cylinder through the second outlet path and the integrated pressure reducer of the empty cylinder to its consumer outlet.

It is further possible to connect a plurality of cylinders together for achieving significantly higher flow rates, such as e.g. for acetylene. As is well known in the art, it is not permissible to draw more than 1 m³/h from a single cylinder. Thus, when a flow of 4 m³/h is required, it becomes necessary to connect four cylinders together. The special interconnect connector of the present invention enables the quick and safe connection of several cylinders without pressure reducer to one with a single integrated pressure reducer.

### Brief description of the Figures

Fig. 1 shows a conventional valve assembly with a conventional filling port.
Fig. 2 shows a valve assembly with the universal filling port according to the invention.
Fig. 3 depicts an isometric view of the valve assembly according to the invention.
Fig. 4 shows a side view with indicated cross-section of the valve assembly according to the invention.
Fig. 5 shows a cross section of the Universal filling port according to a first embodiment of the invention with filling connector according to the invention inserted.
Fig. 6 shows a cross section of the Universal filling port according to a first embodiment of the invention with a flow connector according to the invention inserted.
Fig. 7 shows a cross section of the Universal filling port according to a first embodiment of the invention with a flow connector with incorporated filter according to the invention inserted.
Fig. 8 shows the cross section of the Universal filling port according to the invention with interconnect connector according to the invention inserted.
Fig. 9 shows a cross section of the Universal filling port according to a second embodiment of the invention with a flow connector with incorporated filter according to the invention inserted.

### Detailed description of the figures

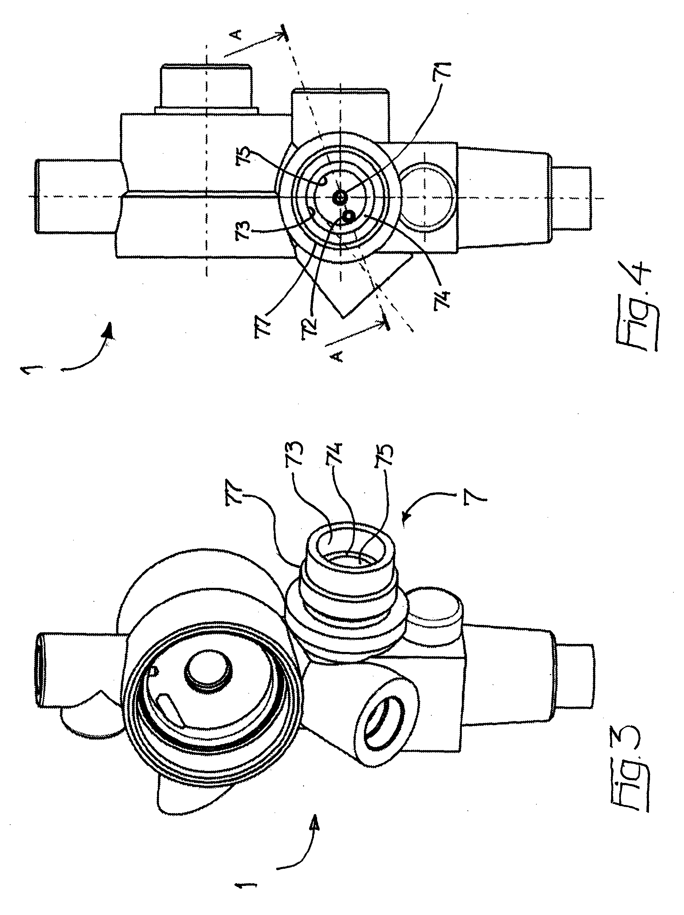

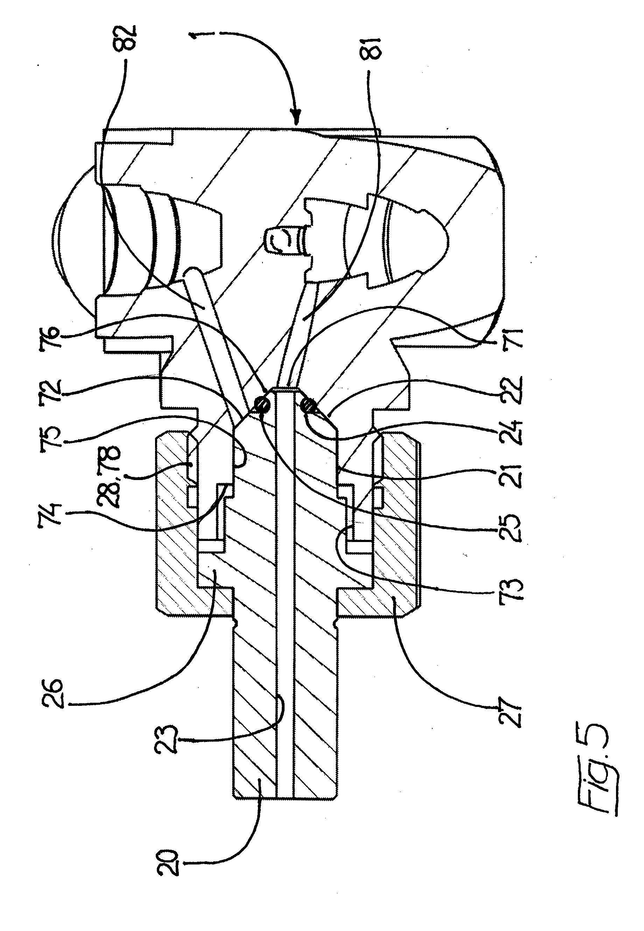

In Fig. 2, a valve assembly 1 connects a cylinder 2 with a consumer outlet 3. An optional filter 4 may be placed between the outlet of cylinder 2 and main valve 5. An optional high-pressure gauge 6 may be provided on the high-pressure side of main valve 5. On the downstream side of main valve 5, a first port 71 of universal filling port 7 is foreseen.

Universal filling port 7 further comprises a second port 72 connected to the upstream side of an integrated pressure reducer 8. The low-pressure side of integrated pressure reducer 8 is connected to consumer outlet 3. An optional low-pressure gauge 9 may be provided on the low-pressure side of integrated pressure reducer 8, as well as a vent relief valve 10, which is also optional.

For refilling of cylinder 2, a filling connector 20 is attached to filling port 7, establishing a connection with first port 71 only, while at the same time effectively sealing off second port 72. When main valve 5 is opened, gas flow occurs from filling connector 20 entering valve assembly 1 through first port 71 of filling port 7, and flowing through main valve 5, and optional filter 4 into cylinder 2. Second port 72 of Universal filling port 7 is sealed, so that no gas leak occurs and none of the refilling substances reach the upstream part of integrated pressure reducer 8. It is thus no longer necessary to close off integrated pressure reducer 8, or seal consumer outlet 9.

For drawing gas from cylinder 2, a flow connector 30 is inserted into Universal filling port 7. Flow connector 30 established a link between first port 71 and second port 72 and is otherwise sealed towards the environment. When opening main valve 5 for drawing gas from cylinder 2, the gas flow occurs through optional filter 4, main valve 5, via first filling port 71, passing through flow connector 30 into second port 72, through integrated pressure reducer 8, and reaches consumer outlet 9.

A further improvement can be achieved if no filter 4 is foreseen in the path between main valve 5 and cylinder 2. Emptying cylinder 2 by vacuum is thus greatly facilitated. If the application does require the presence of a filter when drawing gas, a filter 32 may be provided in the internal flow path of flow connector 30. The filter 32 is thus only present when drawing gas from cylinder 2, but does not hinder the cleaning thereof by vacuum.

Fig. 3 depicts an isometric view of the valve assembly according to the invention.

Fig. 4 shows a side view with indicated cross-section of the valve assembly according to the invention.

In Fig. 5, a first embodiment of universal filling port 7 is shown with filling connector 20 engaged. Universal filling port 7 is formed by an interior chamber 70 defined by a central borehole 75 in valve assembly 1, into which a nozzle 21 of filling connector 20 can be inserted. Borehole 75 is foreseen with a frusto-conical end 76. At the center of borehole end 76 the first port 71 is provided, in the form of a further borehole forming the cylinder passage 81.

The frusto-conical end 76 features a second port 72 in the form of another borehole forming the outlet passage 82, placed near the outer circumference of the frusto-conical section of end 76. This arrangement ensures that sufficient radial distance is provided on the inner surface of frusto-conical end 76 for engaging with sealing ring 25 provided in circumferential recess 24 on the outer surface of filling connector nozzle tip 22 to form a tight seal between nozzle tip 22 and borehole end 76, thus separating first port 71 and second port 72. At the same time, sealing ring 25 ensures that an exclusive gas-tight connection is established between inner bore 23 of nozzle tip 22 and the first port 71 only.

While the embodiment shown in Fig. 5 shows second port 72 located near the outer circumference of the frusto-conical section of end 76, other arrangements are also possible, e.g. placing it on the cylindrical surface of central borehole 75, as long as sufficient radial displacement exists for sealing ring 25 to engage and form a gas tight seal.

Also, the diameter of first and second ports is primarily determined by the gas flow, but can be freely chosen as long as the principal arrangement according to the invention is maintained.

Outer borehole 73 has a larger diameter than central borehole 75 and is further provided with a recess 74 where it meets central borehole 75. Recess 74 forms a shoulder for engagement with an outer sealing ring 35 or 45.2 provided in flow connector 30 or interconnect connector 40, at about half the depth of central borehole 75.

While in the embodiments described here, the sealing rings 25, 35, 45.1, and 45.2 are foreseen on the filling connector 20, the flow connector 30, and the interconnect connector 40, respectively, they may alternatively be provided within universal filling port 7.

In a first embodiment, also shown in Fig. 5, filling connector 20 is of cylindrical shape with a central bore 23 along its longitudinal axis. A frusto-conical nozzle tip 22 conforms to the shape of the frusto-conical borehole end 76 in universal filling port 7 of valve assembly 1. Near the end of nozzle tip 22, a recess 24 is formed to accept sealing ring 25. At a distance from nozzle tip 22, which corresponds to at least the depth of central borehole 75 of universal filling port 7 in valve assembly 1, a flange 26 is provided. A union nut 27 is foreseen with internal threading 28 to engage with external threading 78 provided on the external surface of universal filling port 7. When tightening union nut 27, it is pressed against flange 26 of filling connector 20, which in turn causes nozzle tip 22 to press sealing ring 25 tightly against the end 76 of universal filling port 7.

On the outer circumference of universal filling port 7, external threading 78 is foreseen. This threading enables the union nut 27 of filling connector 20 to be tightened around universal filling port 7, and thus leading to sufficient pressure on sealing ring 25 to effect a gas-tight seal of the connection between inner bore 23 of nozzle tip 22 and the first port 71 only.

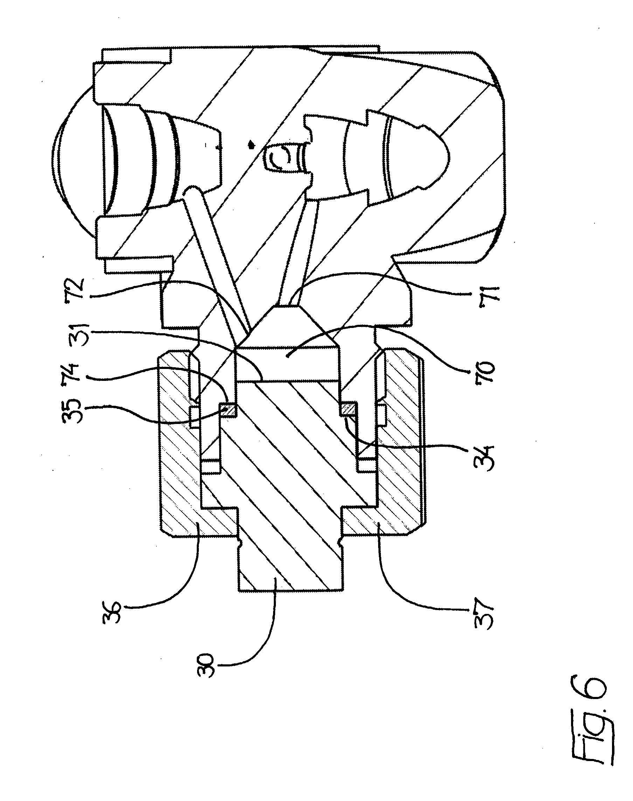

In Fig. 6, the same universal filling port 7 is shown, with like references designating like components. Here, however, the filling connector 20 has been replaced by a flow connector 30. Flow connector 30 is of generally cylindrical shape of the same dimensions as filling connector 20. One important difference is that the end 31 of flow connector 30 does not reach the frusto-conical end 76 of universal filling port 7, thereby defining a much larger interior chamber 70 which in turn connects first port 71 with second port 72. In addition to flange 36 and union nut 37, flow connector 30 is also foreseen with a shoulder 34 on the outer circumference. A sealing ring 35 placed on this shoulder will engage with recess 74 in universal filling port 7 when tightening union nut 37. This ensures that flow connector 30 establishes an exclusive link between first port 71 and second port 72 only and is otherwise sealed towards the environment.

When opening main valve 5 for drawing gas from cylinder 2, the gas flow occurs through optional filter 4, main valve 5, via first filling port 71, passing through the chamber created between the end flow connector 30 and central borehole 75 into second port 72, through integrated pressure reducer 8, and before reaching consumer outlet 3.

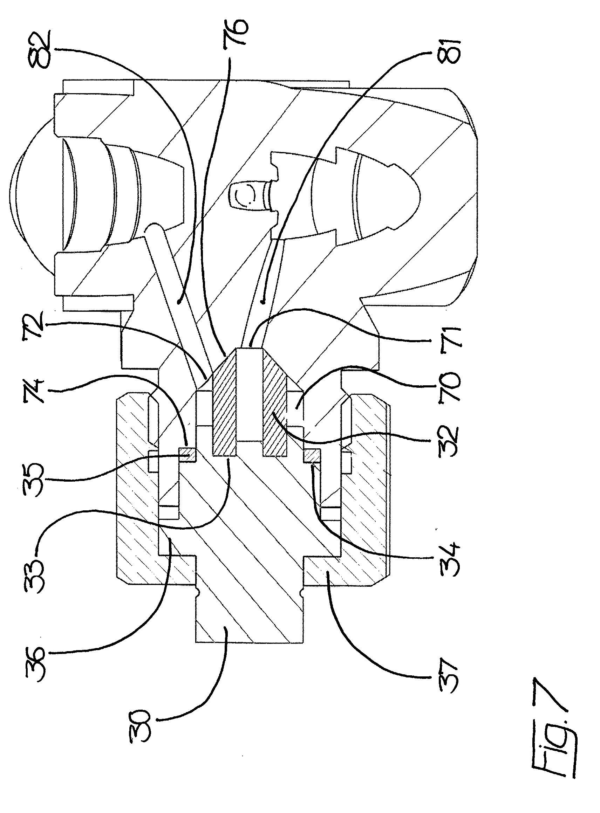

A further improvement shown in Fig. 7 can be achieved by placing a filter 32 on the end of flow connector 30 inside interior chamber 70, such that all gas flow from cylinder 2 through first port 71 passes through this filter 32 placed inside interior chamber 70 before it reaches second port 72 and on to consumer port 9. The shape of this filter will generally correspond to the dimensions of frusto-conical nozzle tip 22 of filling connector 20 and fill most of interior chamber 70. While e.g. a solid filter could be used, it is particularly advantageous to use a hollow cylindrical filter, with the hollow passage confronting first port 71 and the outer diameter chosen smaller than the diameter of borehole 75 such that a ring shaped chamber exists for collecting the gas after passing through the filter and before it continues to exit through second port 72.

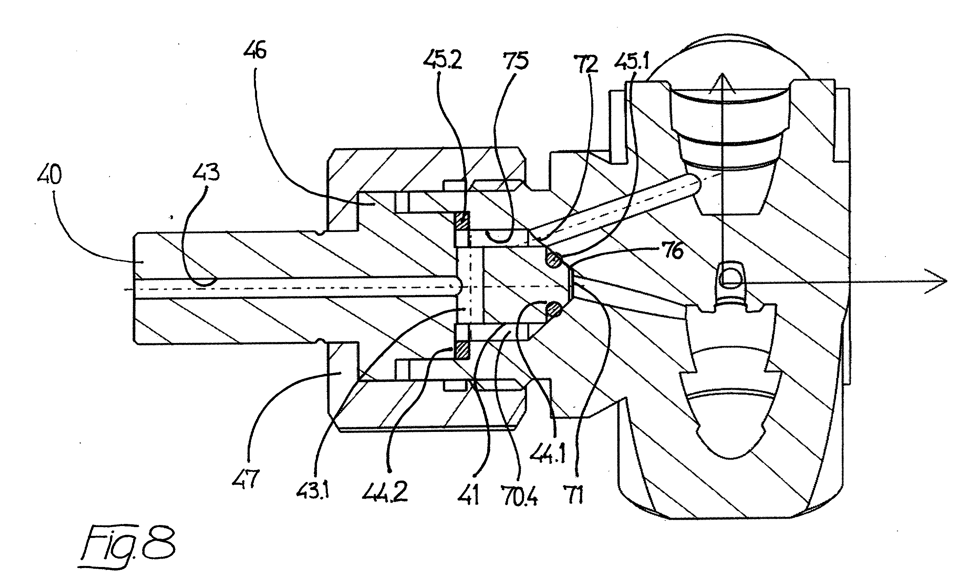

In Fig. 8, the same universal filling port 7 is shown, again with like references designating like components. Here, however, the filling connector 20 has been replaced by an interconnect connector 40. Interconnect connector 40 is of generally cylindrical shape and of the same dimensions as filling connector 20. One important difference is that while the frusto-conical tip 42, equipped with a sealing ring 45.1 placed in recess 44.1, of interconnect connector 40 does reach the frusto-conical end 76 of universal filling port 7, the diameter of the tip portion 41, 42 is chosen smaller than the inner diameter of borehole 75, so that a circumferential flow passage 70.4is created therebetween. A radial bore 43.1 connects axial interconnect passage 43 via said circumferential flow passage 70.4with second port 72. In addition to flange 46 and union nut 47, interconnect connector 40 is also foreseen with a shoulder 44.2 on the outer circumference. An outer sealing ring 45.2 placed on this shoulder will engage with recess 74 in universal filling port 7 when tightening union nut 47. This ensures that interconnect connector 40 establishes a link between interconnect passage 43 and second port 72 only, while at the same time sealing off first port 71, and is otherwise sealed towards the environment.

When opening external the gas source, the gas flow occurs through interconnect connector 40, via radial bore 43.1 and axial flow passage 70.4 into second port 72, from where it continues through integrated pressure reducer 8, and reaches consumer outlet 9.

In a second embodiment of universal filling port 7 all elements remain unchanged, except that borehole 75 is cylindrical and foreseen with a planar end 76. At the center of borehole end 76 the first port 71 is provided, in the form of a further borehole forming the first cylinder passage 81.

The planar end 76 features a second port 72, placed near the outer circumference of the planar end 76. Just as in the first embodiment, this arrangement ensures that sufficient radial distance is provided on the inner surface of planar end 76 for engaging with sealing ring 25 provided on the outer surface of filling connector nozzle tip 22 to form a tight seal between first port 71 and second port 72. At the same time, sealing ring 25 ensures that an exclusive gas-tight connection is established between inner bore 23 of nozzle tip 22 and the first port 71 only.

In a second embodiment, not shown in the drawings, filling connector 20 is of cylindrical shape with a central bore 23 along its longitudinal axis. A cylindrical nozzle tip 22 with planar end conforms to the shape of the planar borehole end 76 in universal filling port 7 of valve assembly 1. On the planar end of nozzle tip 22, a circular recess 24 is formed to accept sealing ring 25.

Again, other arrangements of placing second port 72 are also possible, e.g. placing it on the cylindrical surface of central borehole 75, as long as sufficient radial displacement exists for sealing ring 25 to engage with planar borehole end 76 and form a gas tight seal.

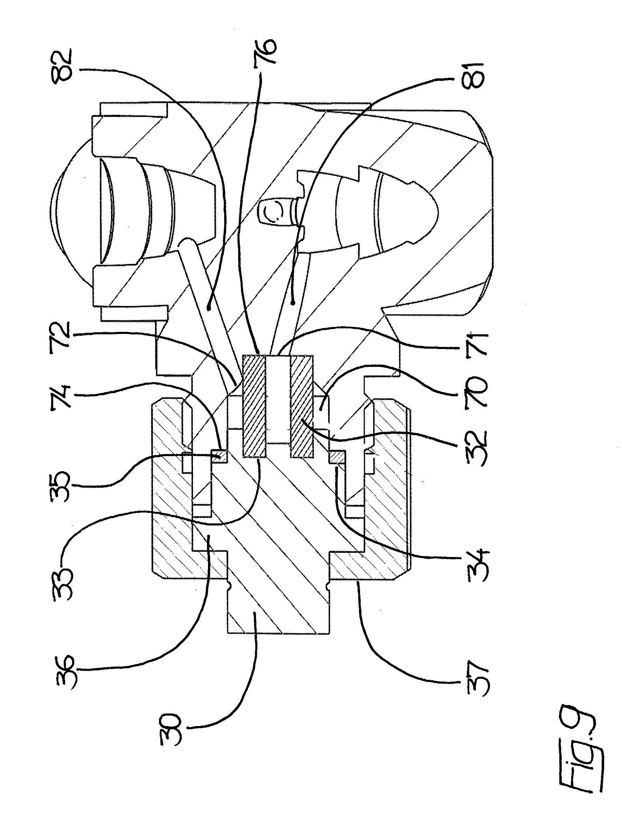

In a second embodiment of flow connector 30 equipped with filter 32, shown in Fig. 9, the shape of this filter will generally correspond to the dimensions of cylindrical nozzle tip 22 of filling connector 20 and fill most of interior chamber 70.

In a second embodiment, interconnect connector 40 is of generally cylindrical shape and of the same dimensions as filling connector 20. One important difference is that while the cylindrical tip 42 equipped with a sealing ring 45.1 placed in recess 44 at the end of cylindrical tip 42 does reach the planar end 76 of universal filling port 7, the diameter of the tip portion 41, 42 is chosen smaller than the inner diameter of borehole 75, so that a flow passage 70.4 is created therebetween. This ensures that interconnect connector 40 establishes a link between interconnect passage 43 and second port 72 only, while at the same time sealing off first port 71, and is otherwise sealed towards the environment.

While the above embodiments have been described with reference to a first port at the center of end 76 and second port 72 placed near the outer circumference of borehole end 76, other arrangements are also possible. The shape of borehole end 76 and corresponding connector tips 21, 22, 41 is not limited to frusto-conical or cylindrical shapes, but could also be e.g. spherical, parabolic or of any other suitable shape.

It is essential that universal filling port 7 comprises two distinct ports: first port 71 for connecting to a first cylinder path leading from the filling port to the cylinder and second port 72 for connecting to a second outlet path leading from the filling port towards the consumer outlet. Filling connector 20 is provided with a first seal for effecting a first sealed path between the filling passage and first port 71 only, while flow connector 30 is provided with a second seal effecting a second sealed path between first port 71 and second port 72 only. Further, interconnect connector 40 comprises two seals which together with the arrangement of the first and second filling port ensure that gas flow occurs exclusively between an external gas source and the outlet passage.

## Claims

1. A valve assembly (1) for gas cylinders (2) with a consumer outlet (9) and a universal filling port (7) for receiving a filling connector (20), **characterized by** the universal filling port (7) comprising a first port (71) connecting the universal filling port (7) to the cylinder (2), and further a second port (72) connecting the universal filling port (7) to a consumer outlet (9).

2. The valve assembly according to claim 1, wherein the first port (72) and the second port (72) are located at different radial distances from the main axis of universal filling port (7).

3. The valve assembly according to claim 1 or 2, wherein the universal filling port (7) comprises a borehole (75) at the end (76) of which the first port (71) is located.

4. The valve assembly according to any of the preceding claims, wherein the second port (72) is located on the inner surface of cylindrical borehole (75).

5. The valve assembly according to any of the preceding claims, wherein the borehole (75) further comprises a recess (74) for engagement with a sealing ring (35, 45.2) on a connector (30, 40) insertable into universal filling port (7).

6. The valve assembly according to any of the preceding claims, wherein the valve assembly (1) further comprises an integrated pressure reducer (8) connected to the outlet path (78) of second port (72).

7. A filling connector (20) for insertion into valve assembly (1) according to any one of claims 1 - 6, wherein the filling connector (12) comprises a connection from an external gas source and means for establishing an exclusive flow path therefrom to the first port (71) of universal filling port (7) when inserted into Universal filling port (7), while at the same time sealing off second port (72).

8. A filling connector according to claim7, wherein the means for establishing an exclusive flow path therefrom filling connector to the first port (71) of universal filling port (7) comprise a tip portion (21, 22) conforming to the shape of central borehole 75 of universal filling port 7.

9. A flow connector (30) for insertion into valve assembly (1) according to any one of claims 1 - 6, wherein the flow connector (30) establishes an exclusive flow path (70) between first port (71) and second port (72) of Universal filling port (7) when inserted into Universal filling port (7).

10. A flow connector (30) according to claim 9 wherein the flow connector is of cylindrical shape.

11. A flow connector (30) according to claim 9 or 10 wherein a filter (32) conforming to the shape of borehole (75) in valve assembly (1) is placed on the end of the flow connector.

12. A flow connector (30) according to claim 11 wherein the filter (32) is hollow, of cylindrical shape, with a tip portion whose outer diameter is smaller than the diameter of borehole (75) of universal filling port (7), thus creating a ring shaped chamber (70) around it.

13. An interconnect connector (14) for insertion into a valve assembly (1) according to any one of claims 1 - 6, wherein the interconnect connector (40) comprises a connection from an external gas source and means for establishing an exclusive flow path therefrom to the second port (72) of universal filling port (7) when inserted into universal filling port (7), and means for sealing off first port (71) of universal filling port (7).

14. The interconnect connector (14) according to claim 13, wherein the means for sealing off first port (71) of universal filling port (7) comprise a tip portion (41, 42) conforming to the shape of central borehole 75 of universal filling port 7.
